# EUROPEAN PATENT APPLICATION

(11) **EP 4 414 067 A1**
(43) Date of publication of application: **14.08.2024**
(21) Application number: 24155035.9
(22) Date of filing: 31.01.2024
(51) Int. Cl.: B01J 21/04, B01J 23/00, B01J 23/648, B01J 35/57, B01J 37/02, B01J 37/03

(54) **TRANSITION METAL INCORPORATED ALUMINA FOR IMPROVED THREE WAY CATALYSTS**

(30) Priority: 09.02.2023 US 202363484055 P; 05.09.2023 US 202363580449 P
(71) Applicant: Johnson Matthey Public Limited Company, London EC4A 4AB (GB)
(72) Inventor: NAGAOKA, Shuhei, Sakura-shi, Tochigi 329-1412 (JP); YILIGUMA, Sakura-shi, Tochigi 329-1412 (JP)
(74) Representative: Boult Wade Tennant LLP

(57) **Abstract**

Provided is a catalyst article comprising a substrate and a catalyst composition disposed on the substrate, the catalyst composition comprising a support material having supported thereon: one or more platinum group metals (PGMs); and a Ta-polyoxometalate (POM).

## Description

### FIELD OF THE INVENTION

The present invention relates to a catalyzed article useful in treating exhaust gas emissions from gasoline engines, and in particular to an intermediate product in the preparation thereof.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three way catalyst). TWCs perform three main functions: (1) oxidation of CO; (2) oxidation of unburnt HCs; and (3) reduction of NOₓ.

Despite advances in TWC technology, there remains a need for improved catalytic converters for certain engine platforms that simultaneously improve the performance in cold start stage, give better light-off performance, as well as at hot transient stage, give better OSC performance, with wide range of Pt, Pd, and/or Rh applications. This invention solves these problems amongst others.

### SUMMARY OF THE INVENTION

One aspect of the present disclosure is directed to a catalyst article comprising a substrate and a catalyst composition disposed on the substrate, the catalyst composition comprising a support material having supported thereon: one or more platinum group metals (PGMs); and a Ta-polyoxometalate (POM).

The invention also encompasses a catalyst article obtained or obtainable by calcining a catalyst article according to any preceding claim.

The invention also encompasses a catalyst article comprising a substrate and a catalyst composition disposed on the substrate, the catalyst composition comprising a support material having supported thereon: one or more platinum group metals (PGMs); and Ta₂O₅; wherein the catalyst composition is obtained or obtainable by a method comprising: providing a support material comprising one or more PGMs supported thereon; providing a solution comprising a Ta-POM; contacting the support material with the solution to provide a support material comprising the Ta-POM supported thereon; and calcining the support material comprising the Ta-POM supported thereon.

The invention also encompasses an exhaust gas treatment system comprising a catalyst article according to the invention.

The invention also encompasses a fuel combustion and exhaust gas treatment system comprising an engine and the exhaust gas treatment system of the invention.

The invention also encompasses a method of treating an exhaust gas, the method comprising passing an exhaust gas through a catalyst article according to the invention.

The invention also encompasses a use of a Ta-POM in a method of manufacturing a catalyst article comprising one or more PGMs supported on a support material.

### BRIEF DESCRIPTION OF THE DRAWINGS

**FIG. 1** shows one embodiment according to the present invention, which contains a first catalytic region with a length of 100% to the axial length L of the substrate (single layer).
**FIG. 2** shows one embodiment according to the present invention, in which the first catalytic region extends 100% of the axial length L, as bottom layer; and the second catalytic region extends 100% of the axial length L, as top layer.

### DETAILED DESCRIPTION OF THE INVENTION

The present invention is directed to the catalytic treatment of combustion exhaust gas, such as that produced by gasoline and other engines, and to related catalysts compositions, catalytic articles, and systems. More specifically, the invention relates to the simultaneous treatment of NOₓ, CO, and HC in a vehicular exhaust system. Although most of technology developments to improve TWC performance have been focused on increasing thermal stability of alumina support materials by doping of lanthanum or other rare earth elements, the inventors have surprisingly discovered that applying Ta to a PGM-loaded support material via a particular anionic complex may provide a further impact on the improved light-off performance of TWCs and the resulting emission control performance. The inventors have discovered that TWC potential performance under light-off tests as well as substantial performance under emission control tests were improved with this invention. The processes of the present invention may also significantly reduce the PGM loading requirements in TWCs, which can save precious natural resource as well as to reduce the costs of the catalyst products.

One aspect of the present disclosure is directed to a catalyst article comprising a substrate and a catalyst composition disposed on the substrate, the catalyst composition comprising a support material having supported thereon: one or more platinum group metals (PGMs); and a Ta-polyoxometalate (POM).

Through intensive research, the inventors have surprisingly found that by applying Ta to a PGM-loaded support material via a Ta-POM, a catalyst composition can be provided that may demonstrate excellent catalytic properties (e.g., one or more of the emissions, THC/NMHC, CO and NOₓ emission could be significantly reduced during vehicle testing by using catalyst as described herein). More specifically, such catalyst compositions may improve the light-off temperature for NOₓ and THC conversion, even more notably after redox ageing (such as at 1000-1050 °C for 4 hours). This improvement has been noted with respect to reference catalysts comprising a simple conventional support material (such as Rh/alumina), a support material on which Ta₂O₅ is supported by applying Ta₂O₅ thereto (at the same loading of Ta) and a support material on which Nb was applied thereto via a Nb-POM, each having Rh supported thereon. The Ta-POM sample of the invention may provide higher conversion at all temperatures, but in particular at lower temperatures, i.e. lowering the light-off temperature, for NOₓ and THC.

Without wishing to be bound by theory, it is thought that by applying the Ta to the support material via a Ta-POM, due to the high negative charge of the Ta-POM, there may be an electrostatic attraction between the PGM (via an induced-charge interaction or due to a slight positive charge that may be present on the PGM, for example), which means that the Ta-POM may be located in the vicinity of and/or in direct contact with the PGM (particles) on the support material. Thus, on calcination and/or during use of the catalyst article at the high temperatures in exhaust gas treatment systems, the Ta-POM may form Ta₂O₅ on the surface of the PGM (particles) and/or in the vicinity of the PGM (particles). In this way the resulting Ta₂O₅ may impart greater hydrothermal stability on the PGM-loaded support material (i.e. compared to PGMs, such as Rh, supported on simple alumina or pure Ta₂O₅, for example). This interaction is surprising and unexpected, and has not been investigated for this use before. It is also thought that the Ta-POM may provide a greater improvement in the light-off temperatures compared to the Nb-POM, for example, because the oxygen atoms of the Ta-POM may have a relatively higher charge than the oxygen atoms on the Nb-POM. This may be because Ta is more polarizable than Nb.

In other words, it is thought that the relatively strong interaction between the negative charge of the Ta-POM and the one or more PGMs (preferably Rh) influences the initial state of the one or more PGMs, which can improve the TWC performance of the catalyst even after ageing.

Of course, this means that the catalyst article of the first aspect may be considered as an intermediate product or a "fresh" product for use in an exhaust gas treatment system. This is because the Ta-POM may not be thermally stable at the operating temperature of exhaust gas catalysts. Thus, the Ta-POM may decompose into Ta₂O₅ on heating. In fact, as explained above, this may be the cause of the technical advantages described herein. In other words, the catalyst article of the first aspect may be included "fresh" in an exhaust gas treatment system, but then form a final catalyst article during use. Alternatively, the catalyst article may be calcined prior to first use as described herein.

As is conventional in the art, the term "light-off temperature" of a catalyst as used herein may refer to the temperature at which the conversion by that catalyst of a particular pollutant reaches 50%.

Preferably, the catalyst article is for treating exhaust gas from an internal combustion engine, more preferably a gasoline engine. Preferably, the catalyst article is a TWC article. The catalyst article may be particularly suitable for such applications, due to the advantageous NOₓ and THC conversion exhibited by the catalyst article, as described herein.

Preferably, the Ta-POM comprises Ta-hexametalate. The Ta- hexametalate is preferably [Ta₆O₁₉]⁸⁻. The precursor for the Ta-POM may comprise an alkali-metal salt thereof, such as a potassium salt thereof. The Ta-hexametalate has been shown to be particularly effective at providing the advantages described herein. Ta-POMs, and their manufacture, are known to the skilled person in isolation.

Preferably, the one or more PGMs comprise one or more of Pt, Pd, Rh, and mixtures or alloys thereof, more preferably the one or more PGMs comprise Pd and/or Rh, even more preferably the one or more PGMs comprise Rh, and still more preferably the one or more PGMs consist of Rh. In some embodiments, the catalyst composition is preferably substantially free of PGMs other than Rh.

Preferably, the one or more PGMs comprise nanoparticles. The term "nanoparticles" as used herein may encompass particles having a mean particle diameter of from 0.01 to 1000 nm, for example, measured by a CO-pulse adsorption method. Preferably, the one or more PGMs comprise nanoparticles having a mean particle diameter of from 0.1 to 10 nm, preferably from 0.5 to 9 nm, more preferably from 1 to 8 nm, even more preferably from 2 to 7 nm, still more preferably from 3 to 6 nm, and most preferably from 4.5 to 6 nm. The mean particle diameter may be measured by a CO-pulse adsorption method. While catalyst compositions comprising a broad range of particle sizes may still provide the advantages described herein, it has surprisingly been found that the effect on increased NOₓ and/or THC conversion for aged catalyst compositions according to the invention may be greater for the larger PGM (such as Rh) particle sizes, for example about 5.3 nm compared to about 0.8 nm. In other words, it has been found that the light-off temperature for NOₓ and THC conversion for aged catalysts may be lower when the particle sizes are larger and within the preferred ranges. This is surprising and unexpected. It may be typical, for example, to prefer smaller PGM particle sizes for increased activity/conversion due to the higher surface area provided by such smaller particles and to limit the effects of PGM-nanoparticle sintering. By contrast, in the present invention the activity and light-off temperatures may be improved for the larger PGM nanoparticles compared to the smaller PGM nanoparticles. Without wishing to be bound by theory, it is thought that this may be because, sterically, there may be more space for more Ta-POM ions to interact with each Rh nanoparticle.

Preferably, the support material comprises one or more of alumina and a ceria-containing mixed oxide, preferably alumina and/or a ceria-zirconia mixed oxide, more preferably alumina. The catalyst composition has been shown to be particularly effective for alumina-based support materials.

In certain embodiments, the alumina preferably comprises gamma alumina. In other embodiments, the alumina preferably comprises theta alumina.

Preferably, the support material further comprises a dopant comprising one or more of lanthanum, neodymium, yttrium, niobium, praseodymium, hafnium, molybdenum, titanium, vanadium, zinc, cadmium, copper, silicon, calcium, barium, strontium, caesium, magnesium, potassium and sodium, more preferably one or more of lanthanum, neodymium, praseodymium, hafnium and yttrium, even more preferably lanthanum. Preferably, the dopant is present in the support material in an amount of from 0.001 to 20 wt.%, preferably from 0.5 to 10 wt.%, based on a total weight the support material. More preferably, the dopant is present in the support material in an amount of from 0.5 to 10.0 wt.%, more preferably from 1.0 to 8.0 wt.%, even more preferably from 1.5 to 7.0 wt.%, still more preferably from 2.0 to 6.0 wt.%, yet still more preferably from 3.0 to 6.0 wt.%, based on the total weight of the support material. Throughout the application, "wt.%" in connection with a dopant, for example, is calculated based on the metal oxide thereof. When doped, the support material is preferably a mixed oxide.

Preferably, the support material comprises La-doped alumina, preferably comprising about 4 wt.% La, based on the total weight of the support material.

Accordingly, a particularly preferred aspect of the invention is a catalyst article comprising a substrate and a catalyst composition disposed on the substrate, the catalyst composition comprising alumina having supported thereon: Rh; and a Ta-hexametalate, preferably wherein the alumina further comprises La as a dopant.

Preferably, at least a portion of the Ta-POM is in direct contact with at least a portion of the one or more PGMs. As described herein, this interaction may be facilitated by electrostatic interactions between the one or more PGMs and the negative charges on the oxygen atoms of the Ta-POM.

Preferably, at least 70 wt.% of the Ta-POM that is supported on the support material is in direct contact with at least a portion of the one or more PGMs, based on the total weight of Ta-POM supported on the support material. Without wishing to be bound by theory, in the present invention, the Ta-POM that may preferably be loaded via an impregnation method may be present as one or more of hydrous tantalum oxide, protonated [Ta₆O₁₉]⁸⁻, and H₂O-separated ion pairs of K⁺ / [Ta₆O₁₉]⁸⁻, for example. This may be measured by extended X-ray absorption fine structure (EXAFS) and/or X-ray absorption near edge structure (XANES) spectroscopy, for example. Preferably, at least 80 wt.%, more preferably at least 90 wt.%, even more preferably at least 95 wt.% of the Ta-POM that is supported on the support material is in direct contact with at least a portion of the one or more PGMs, based on the total weight of Ta-POM supported on the support material.

Preferably , the molar ratio of the Ta-POM to the one or more PGMs supported on the support material is from 1:1 to 100:1, preferably from 3:1 to 70:1, more preferably from 5:1 to 50:1, even more preferably from 10:1 to 50:1, still more preferably from 15:1 to 50:1. In certain embodiments, the molar ratio of the Ta-POM to the one or more PGMs supported on the support material can be from 1: 1 to 70:1 or from 1: 1 to 50:1. Since the Ta-POM is preferably a Ta-hexametalate, the molar ratio of the Ta atoms to the one or more PGMs is therefore preferably six times this much. Catalyst compositions having such a ratio may facilitate the advantages described herein.

Preferably, the catalyst composition comprises from 0.01 to 2.0 wt.% of the one or more PGMs, preferably from 0.05 to 1.0 wt.% of the one or more PGMs, more preferably from 0.07 to 0.5 wt.% of the one or more PGMs, based on the total weight of the support material. Catalyst compositions having such a wt.% of the one or more PGMs may facilitate the advantages described herein.

Preferably, the catalyst composition comprises from 0.01 to 20 wt.% Ta, preferably from 0.1 to 15 wt.% Ta, more preferably from 0.2 to 10 wt.% Ta, even more preferably from 1.0 to 10.0 wt.%, still more preferably from 2.0 to 10.0 wt.%, based on the total weight of the support material. Catalyst compositions having such a wt.% of the Ta may facilitate the advantages described herein.

Preferably, the substrate is a flow-through monolith or a wall-flow filter, more preferably a flow-through monolith.

Preferably, the catalyst composition of the catalyst article is obtained or obtainable by a method comprising:
providing a support material comprising one or more PGMs supported thereon;
providing a solution comprising a Ta-POM; and
contacting the support material with the solution.

Preparing the catalyst article in this way has been found to be particularly effective.

Preferably, the solution comprising a Ta-POM is an aqueous solution comprising a Ta-POM. Preferably, the solution comprises from 1 to 5 M of the Ta-POM. An aqueous solution may help to facilitate the advantageous Ta-POM to PGM electrostatic interactions discussed herein.

Preferably, providing the support material comprising one or more PGMs supported thereon comprises pre-treating the support material comprising one or more PGMs supported thereon at a temperature of from 300 to 500°C for from 1 to 3 hours. In other words, the one or more PGMs are preferably secured onto the support material prior to the addition of the Ta-POM. Preferably, the pre-treatment is at about 400°C for about 2 hours. Preferably, the atmosphere during the pre-treatment comprises about 3% H₂ and the balance N₂. Preferably, after contacting the support material with the solution, the resulting slurry is stirred for from about 1 minute to about 30 minutes, preferably about 10 minutes, preferably under a nitrogen atmosphere. Preferably, the formed catalyst composition is then collected by vacuum filtration, preferably in air. Preferably, the recovered catalyst composition is then washed with water and dried.

If the support material comprises alumina, then the specific surface area (SSA) of the alumina is preferably 80-220 m²/g, more preferably 100-200 m²/g, and even more preferably 130-180 m²/g, measured by the Brunauer-Emmett-Teller (BET) method. Moreover, the alumina preferably has a crystallite size of 5-30 nm, more preferably 10-25 nm and even more preferably 15-20 nm. Moreover, the alumina preferably has a D50 of from 10 to 20 nm, more preferably from 12 to 18, even more preferably from 14 to 16 nm and still more preferably about 15 nm. The D50 may be measured by TEM. After being hydrothermally aged for 4 hours at 1000 °C under air with 10% steam, in certain embodiments, the SSA of the alumina is preferably 1-150 m²/g, more preferably 10-130 m²/g, and even more preferably 20-110 m²/g, measured by BET. In some embodiments, the aged alumina preferably has a crystallite size of 50-300 nm, more preferably 80-200 nm and even more preferably 100-150 nm.

### First Catalytic Region

The catalyst composition may be present in a first catalytic region. In other words, the catalyst article may comprise a substrate and a first catalytic region disposed on the substrate, wherein the first catalytic region comprises the catalyst composition described herein. Unless otherwise indicated, the first catalytic region may be directly disposed on the substrate, i.e. with no intervening material, and/or indirectly disposed on the substrate, i.e. with intervening material. If the substrate is porous, then the catalytic composition may be disposed therein, for example within the pores of the substrate, i.e. wherein the catalytic composition is disposed thereon and/or therein. The catalytic composition is typically disposed on the substrate in the form of a washcoat. The term "washcoat" as used herein is well-known in the field and refers to an adherent coating that is applied to a substrate usually during the production of a catalyst.

Preferably, the first catalytic region further comprises a first oxygen storage capacity (OSC) material, and/or a first alkali and/or alkali earth metal component.

Preferably, the first OSC material comprises cerium oxide, zirconium oxide, a ceria-zirconia mixed oxide, an alumina-ceria-zirconia mixed oxide, or a combination thereof. More preferably, the first OSC material comprises the ceria-zirconia mixed oxide, the alumina-ceria-zirconia mixed oxide or a combination thereof. Preferably, the ceria-zirconia mixed oxide further comprises dopants, such as lanthanum, neodymium, praseodymium, yttrium oxides, *etc.* In some embodiments, the first OSC material preferably comprises the ceria-zirconia mixed oxide and the alumina-ceria-zirconia mixed oxide.

Preferably, the first catalytic region further comprises a first alkali and/or alkaline earth metal.

The first alkali or alkaline earth metal is preferably barium, or strontium, and mixed oxides or composite oxides thereof. Preferably the barium or strontium, where present, is loaded in an amount of from 0.1 to 15 wt.%, and more preferably from 3 to 10 wt.% of barium or strontium, based on the total weight of the first catalytic region.

Preferably the barium or the strontium is present as BaCO₃ or SrCO₃. Such a material can be performed by any method known in the art, for example incipient wetness impregnation or spray-drying.

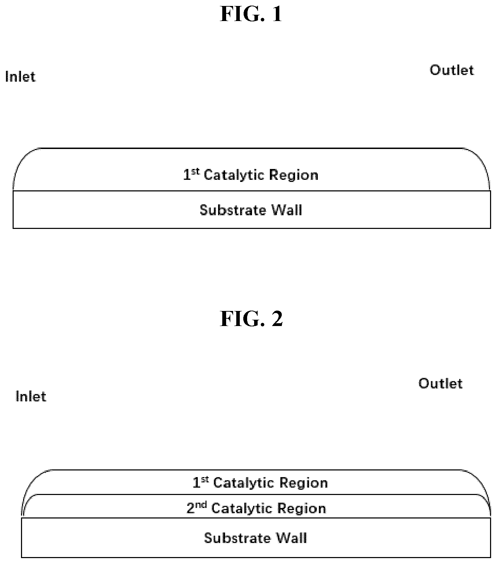

The first catalytic region can extend for 100 percent of an axial length of the substrate. (*E.g., see* **FIGs. 1** and **2**).

The total washcoat loading of the first catalytic region is preferably less than 3.5 g/in³; more preferably, less than 3.0 g/in³ and even more preferably less than 2.5 g/in³. Alternatively, the total washcoat loading of the first catalytic region is preferably from 0.5 to 3.5 g/in³; more preferably, from 0.6 to 3 g/in³ and even more preferably from 0.7 to 2.5 g/in³.

### Second Catalytic Region

Preferably, the catalyst article further comprises a second catalytic region disposed on the substrate.

Preferably, the second catalytic region further comprises a second PGM component, a second oxygen storage capacity (OSC) material, a second alkali and/or alkaline earth metal component, and/or a second inorganic oxide.

The second PGM component preferably comprises one or more of platinum, palladium, rhodium, and mixtures or alloys thereof. In some embodiments, the second PGM component preferably comprises Pd, Pt or a mixture or alloy thereof.

Preferably, the second OSC material comprises cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material preferably further comprises one or more of dopants like lanthanum, neodymium, praseodymium, yttrium *etc.* Moreover, the second OSC material preferably has the function as a support material for the second PGM component. In some embodiments, the second OSC material preferably comprises the ceria-zirconia mixed oxide and the alumina-ceria-zirconia mixed oxide.

The ceria-zirconia mixed oxide preferably has a weight ratio of zirconia to ceria of at least 50:50; preferably, higher than 60:40; more preferably, higher than 70:30. Alternatively, the ceria-zirconia mixed oxide also can have a weight ratio of ceria to zirconia less than 50:50, preferably, less than 40:60, more preferably, less than 30:70.

The second catalytic region preferably comprises the second OSC material (e.g., ceria-zirconia mixed oxide) in an amount of from 10 to 90 wt.%; preferably, 25-75 wt.%; more preferably, 30-60 wt.%, based on the total washcoat loading of the second catalytic region.

The second OSC material loading in the second catalytic region is preferably less than 2 g/in³. In some embodiments, the second OSC material loading in the second catalytic region is preferably no greater than 1.5 g/in³, more preferably no greater than 1.2 g/in³, even more preferably no greater than 1 g/in³, still more preferably no greater than 0.8 g/in³, and yet still more preferably no greater than 0.7 g/in³.

The second alkali or alkaline earth metal is preferably barium, strontium, mixed oxides or composite oxides thereof. Preferably the barium or strontium, where present, is in an amount of from 0.1 to 15 wt.%, and more preferably from 3 to 10 wt.% of barium or strontium, based on the total weight of the second catalytic region.

It is even more preferable that the second alkali or alkaline earth metal is strontium. The strontium, where present, is preferably present in an amount of from 0.1 to 15 wt.%, and more preferably 3 to 10 wt.%, based on the total weight of the second catalytic region.

It is also preferable that the second alkali or alkaline earth metal comprises a mixed oxide or composite oxide of barium and strontium. Preferably, the mixed oxide or composite oxide of barium and strontium is present in an amount of from 0.1 to 15 wt.%, and more preferably from 3 to 10 wt.%, based on the total weight of the second catalytic region. It is more preferable that the second alkali or alkaline earth metal is a composite oxide of barium and strontium.

Preferably the barium or strontium is present as BaCO₃ or SrCO₃. Such a material can be performed by any method known in the art, for example incipient wetness impregnation or spray-drying.

The second inorganic oxide is preferably an oxide of Groups 2, 3, 4, 5, 13 and 14 elements. The second inorganic oxide is preferably selected from the group consisting of alumina, magnesia, silica, zirconia, barium oxides, and mixed oxides or composite oxides thereof. Particularly preferably, the second inorganic oxide is alumina, lanthania-alumina, zirconia, or a silica/alumina composite oxide. More preferably, the second inorganic oxide is alumina, lanthania-alumina, or a silica/alumina composite oxide. One especially preferred second inorganic oxide is alumina or lanthania-alumina. In some embodiments, the second inorganic oxide is lanthania-alumina (*e.g*., lanthanum stabilized alumina), wherein lanthania is up to 10 wt.%, preferably, 2-8, 3-7, or 4-6 wt.% of the second inorganic oxide.

In some embodiments, the second inorganic oxide is doped with a second dopant of at least 5 wt.%, and wherein the second dopant is selected from the group consisting of Zr, Ta, Mo, W, Ti, Nb, and a combination thereof. In further embodiments, the second dopant can be selected from the group consisting of Zr, Ta, Ti, Nb, and a combination thereof. In yet further embodiments, the second dopant can be Ti, Nb, or a combination thereof. In yet another further embodiment, the second dopant can be Ti or Nb. In certain embodiments, the second dopant can be Ti. In other embodiments, the second dopant can be Nb. In certain embodiments, the second dopant content in the second inorganic oxide (such as alumina) can be 5 wt. %-90 wt. %. In some further embodiments, the second dopant content in the second inorganic oxide can be 5 wt. %-20 wt. %. In other further embodiments, the second dopant content in the second inorganic oxide can be 20 wt. %-80 wt. %.

Preferably, the total washcoat loading of the second catalytic region is less than 3.5 g/in³; more preferably, less than 3.0 g/in³ and even more preferably less than 2.5 g/in³. Alternatively, the total washcoat loading of the first catalytic region is preferably from 0.5 to 3.5 g/in³; more preferably, from 0.6 to 3 g/in³ and even more preferably from 0.7 to 2.5 g/in³.

The second catalytic region can extend for 100 percent of the axial length L. (*E.g., see* **FIG. 2**)

In some embodiments, the first catalytic region is preferably supported/deposited directly on the substrate and then the second catalytic region is preferably supported/deposited directly on the first catalytic region. In certain embodiments, the second catalytic region is preferably supported/deposited directly on the substrate and then the first catalytic region is preferably supported/deposited directly on the second catalytic region.

The catalyst article of the invention may comprise further components that are known to the skilled person. For example, the compositions of the invention may further comprise at least one binder and/or at least one surfactant as required. Where a binder is present, dispersible alumina binders are preferred.

### Substrate

Preferably the substrate is a flow-through monolith. Alternatively, the substrate can be a wall-flow filter.

The flow-through monolith substrate may comprise a first face and a second face defining a longitudinal direction there between. The flow-through monolith substrate may have a plurality of channels extending between the first face and the second face. The plurality of channels may extend in the longitudinal direction and provide a plurality of inner surfaces (e.g. the surfaces of the walls defining each channel). Each of the plurality of channels may have an opening at the first face and an opening at the second face. For the avoidance of doubt, the flow-through monolith substrate is not a wall flow filter.

The first face may typically be at an inlet end of the substrate and the second face may be at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is preferably from 600 to 700 channels per square inch. The channels can have cross sections that are rectangular, square, circular, oval, triangular, hexagonal, or other polygonal shapes.

The monolith substrate may act as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Another aspect of the invention is directed to a catalyst article obtained or obtainable by calcining a catalyst article according to the first aspect.

All preferred features and embodiments of the other aspects apply equally to this aspect where appropriate.

The term "calcination", "calcine", "calcining" and the like as used herein may encompass a thermal treatment process in the absence of, or limited supply of, air or oxygen to bring about a thermal decomposition or change. However, typically, calcination in the present context involves heating in air in an oven. Preferably, the calcination comprises heating (in air in an oven) at a temperature of from 350 to 1100°C, preferably from 400 to 900°C, more preferably from 450 to 800°C for from 1 to 8 hours, preferably from 2 to 5 hours.

Without wishing to be bound by theory, it is thought that the calcination step may cause the thermal decomposition of the Ta-POM into Ta₂O₅. In other words, it is thought that the catalyst article of the present aspect is substantially free the Ta-POM. Due to the location of the Ta-POM with respect to the PGM particles in the intermediate product, it is thought that the Ta₂O₅ typically forms in the vicinity and/or as a coating at least partially coating the (particles of the) one or more PGMs. It is thought that the Ta₂O₅ then provides the PGM-loaded support material with increased hydrothermal stability. However, as described herein and shown in the examples, the simple addition of Ta₂O₅ (not via the Ta-POM) does not exhibit the same advantages for NOₓ and THC conversion, at least to the same extent as for the present invention. For this reason it is thought that the catalyst article of this aspect may be distinguishable from catalyst articles in which Ta₂O₅ is simply disposed on the PGM-loaded support material by virtue of the distribution of the Ta₂O₅ on the support material. This is because in the present invention the Ta₂O₅ may be mostly present on and/or around the PGM particles that are present on the support materials. This can be measured by TEM, for example, which may be able to show the Ta distribution over the alumina. X-ray diffraction may also be useful. Moreover, EXAFS may be useful in determining the ratio of Rh-Rh, Rh-Ta and Ta-Ta interactions in the catalyst article.

Preferably, the catalyst article comprises particles of Ta₂O₅ supported on the one or more PGMs. By "supported on the one or more PGMs" in this context, it is intended that the particles of Ta₂O₅ are in direct contact with the (particles of the) one or more PGMs. The Ta₂O₅ may also be in direct contact with the support material. However, the Ta₂O₅ may be in direct contact with only the one or more PGMs.

In an alternative aspect, a catalyst article comprising a substrate and a catalyst composition disposed on the substrate is provided, the catalyst composition comprising a support material having supported thereon:
one or more platinum group metals (PGMs); and
Ta₂O₅;
wherein the catalyst composition is obtained or obtainable by a method comprising:
   providing a support material comprising one or more PGMs supported thereon;
   providing a solution comprising a Ta-POM;
   contacting the support material with the solution to provide a support material comprising the Ta-POM supported thereon; and
   calcining the support material comprising the Ta-POM supported thereon.

All preferred features and embodiments of the other aspects apply equally to this aspect where appropriate.

Of course, after contacting the support material with the solution, the support material will still comprise the one or more PGMs supported thereon. Typically, the support material comprising the Ta-POM supported thereon may be recovered, typically by filtration or the like, i.e. from the mixture or slurry formed in the step of contacting the support material with the solution. The support material comprising the Ta-POM supported thereon may then further be washed, preferably with water, prior to calcining the support material comprising the Ta-POM supported thereon. The calcined support material may then be cooled or allowed to cool to room temperature after calcining, for example. Contacting the support material with the solution may comprise mixing or stirring the resulting slurry, preferably under an inert, nitrogen atmosphere, preferably for from about 1 minute to about 30 minutes, preferably about 10 minutes.

Another aspect of the invention is directed to an exhaust gas treatment system comprising a catalyst article as described herein in any aspect. All preferred features and embodiments of the other aspects apply equally to this aspect where appropriate.

Another aspect of the invention is directed to a fuel combustion and exhaust gas treatment system comprising an engine and the exhaust gas treatment system of the above aspect. Preferably, the engine is a gasoline engine. All preferred features and embodiments of the other aspects apply equally to this aspect where appropriate.

Another aspect of the invention is directed to a method of treating an exhaust gas, the method comprising passing an exhaust gas through the catalyst article of any aspect described herein, preferably an embodiment in which the Ta-POM has been thermally decomposed, preferably through the exhaust gas treatment system of the above aspect. All preferred features and embodiments of the other aspects apply equally to this aspect where appropriate.

Another aspect of the invention is directed to the use of a Ta-POM in a method of manufacturing a catalyst article comprising one or more PGMs supported on a support material. All preferred features and embodiments of the other aspects apply equally to this aspect where appropriate. Preferably, the use is to improve the TWC performance of the catalyst article. In the context of this aspect, the term "TWC performance" is intended to encompass at least the THC and/or the NOₓ conversion and/or light-off temperature (i.e. to increase the conversion and to decrease the light-off temperature).

In alternative aspects contemplated herein, the Ta-POM is replaced by a Nb-POM. In other words, in such aspects Nb is used instead of Ta. Similar advantages, but to a lesser extent, have been observed with the use of a Nb-POM.

Also provided herein are the following numbered clauses. All preferred features and embodiments of the other aspects apply equally to these clauses where appropriate.
I. A method of manufacturing a catalyst composition, the method comprising:
   providing a support material comprising one or more PGMs supported thereon;
   providing a solution comprising a Ta-POM; and
   contacting the support material with the solution.
II. The method of clause I, wherein the catalyst composition is for three-way catalysis.
III. The method of clause I or clause II, further comprising calcining the catalyst composition.
IV. A method of manufacturing a catalyst article, the method comprising:
   manufacturing a catalyst composition according to the method of any of clauses I-III; and
   disposing the catalyst composition on a substrate.

### DEFINTIONS

The term "article" or "catalyst article" as used herein may encompass an article in which a catalyst is supported thereon or therein. The article may take the form of, for example, a honeycomb monolith, or a filter, e.g. a wall flow filter or a flow-through filter.

The term "substrate" as used herein may encompass, for example, a ceramic or metallic honeycomb, or a filter block, e.g. a wall flow filter or flow-through filter. The substrate may comprise a ceramic or metallic monolithic substrate. The substrate may vary in its material composition, size and configuration, cell shape and density, and wall thickness. Suitable substrates are known in the art, such as cordierite.

The term "catalyst composition" as used herein may encompass a composition that exhibits catalytic activity, in particular to substances present in exhaust gas, preferably gasoline exhaust gas.

The term "disposed on" as used herein may encompass either having a catalyst composition directly disposed on the substrate, i.e. with no intervening material, and/or indirectly disposed on the substrate, i.e. with intervening material. If the substrate is porous, then the term "disposed on" may also encompass having the catalyst composition disposed therein, for example within the pores of the substrate, i.e. wherein the catalyst composition is disposed thereon and/or therein. The catalyst composition is typically disposed on the substrate in the form of a washcoat. The term "washcoat" as used herein is well-known in the field and refers to an adherent coating that is applied to a substrate usually during the production of a catalyst.

The term "polyoxometalate" or "POM" as used herein takes on its usual meaning in the art, which may be, for example, a polyatomic ion, usually an anion, that consists of three or more transition metal oxyanions linked together by shared oxygen atoms to form closed 3-dimensional frameworks.

The term "support material" as used herein may encompass any material that is capable of supporting at least the one or more PGMs and the Ta-POM thereon or therein. The support material may take any form, but is typically in the form of a powder, more typically a high surface area powder. For example, the support material may be in the form of a powder having a D50 of, for example, from 0.1 to 30 µm, more typically from 0.5 to 25 µm as measured using TEM, even more typically 1 to 20 µm. Such particle sizes may facilitate desirable rheological properties of a slurry used to coat the substrate. The support material may function as a washcoat. The support material may be a washcoat or may be part of a washcoat. The support material may also serve as an oxygen storage material, which stores and releases oxygen respectively at fuel lean and fuel rich conditions, for facilitating the three-way catalytic conversion.

The term "supported thereon" as used herein in the context of the invention may encompass that the one or more PGMs (typically in the form of nanoparticles) are in direct contact with at least a portion of the surface of the support material and that the Ta-POM is either in direct contact with at least a portion of the surface of the support material or supported on the support material indirectly via the one or more PGMs. Preferably, the Ta-POM is in direct contact with at least a portion of the surface of the one or more PGMs.

Preferably the substrate comprises an inlet end and an outlet end with an axial length L. The term "inlet end" as used herein may encompass the end of the substrate that is intended to be placed in the upstream direction. By contrast, the term "outlet end" as used herein may encompass the end of the substrate that is intended to be placed in the downstream direction. The term "upstream" as used herein indicates a direction in the system towards the source of the exhaust gas. By contrast, the term "downstream" as used herein indicates a direction in the system away from the source of the exhaust gas.

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g., region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of' embraces the expression "consisting of'.

The expression "substantially free of' as used herein with reference to a material, typically in the context of the content of a region, a layer or a zone, means that the material in a minor amount, such as ≤ 5 % by weight, preferably ≤ 2 % by weight, more preferably ≤ 1 % by weight, even more preferably ≤ 0.5 % by weight, still more preferably ≤ 0.1 % by weight and yet still more preferably ≤ 0.01 % by weight. The expression "substantially free of' embraces the expression "does not comprise".

The term "loading" as used herein refers to a measurement in units of g/ft³ on a metal weight basis.

Unless otherwise specified or implied, the use of the terms "first", "second", etc. is intended only as a label, and is not intended to indicate the relative position or location of the particular feature.

The following examples merely illustrate the invention. Those skilled in the art will recognize many variations that are within the spirit of the invention and scope of the claims.

### EXAMPLES

### Materials

All materials are commercially available and were obtained from known suppliers, unless noted otherwise.

### General preparation of catalyst washcoat

Rh was impregnated into a powder of commercially available La-stabilized γ-Al₂O₃ with a surface area of about 200 m²/g, and calcined at 500 °C in an oven. For the POM-added Rh washcoat, hexaniobate (Nb-POM) or hexatantalate (Ta-POM) salt was impregnated into the Rh washcoat powder and then the powder was washed with water, followed by calcination at 500 °C in an oven.

### EXAMPLE 1: Light-Off Performances in Synthetic Catalyst Activity Test for POM-added Rh/alumina Materials

### Comparative Catalyst A

Comparative Catalyst A was a single-layered TWC coated on a ceramic substrate (400 cpsi, 4.0 mil wall thickness). The catalyst layer consisted of Rh supported on a washcoat of La-stabilized alumina. The washcoat loading was about 0.6 g/in³ with a Rh loading of 0.9 g/ft³.

### Comparative Catalyst B

Comparative Catalyst B was a single-layered TWC coated on a ceramic substrate (400 cpsi, 4.0 mil wall thickness). The catalyst layer consisted of Nb-POM-added Rh supported on a washcoat of La-stabilized alumina. The washcoat loading was about 0.6 g/in³ with a Rh loading of 0.9 g/ft³ and Nb loading of 23 g/ft³.

### Catalyst C

Catalyst C was a single-layered TWC coated on a ceramic substrate (400 cpsi, 4.0 mil wall thickness). The catalyst layer consisted of Ta-POM-added Rh supported on a washcoat of La-stabilized alumina. The washcoat loading was about 0.6 g/in³ with a Rh loading of 0.9 g/ft³ and Ta loading of 79 g/ft³.

Comparative Catalyst A, Comparative Catalyst B, and Catalyst C were tested separately over a Synthetic Catalyst Activity Test (SCAT) device. The light-off performance was tested in a gas flow of 10 vol.% H₂O + 15 vol.% CO₂ + 1260 ppm C₃H₆ + 0.2 vol.% H₂ + 0.6 vol.% CO + 0.53 vol.% O₂ + 1000 ppm NO balanced with N₂ (the space velocity was 60000 h⁻¹), and temperature ramp was 30°C/min. The conversion of THC, CO and NOₓ were calculated by comparing the concentration of the feed gas and the gas at the outlets of the catalysts. The conversion is the concentration of the particular species after passing through the catalyst article as a percentage of the input concentration (i.e. the concentration of the species in the feed gas). A series of Comparative Catalysts A and B, and Catalyst C were hydrothermally aged for 4 hours at 1050 °C under redox condition showed in **Table 1.**

**Table 1: Redox Ageing Conditions**

| Condition | CO (%) | H₂ (%) | O₂ (%) | H₂O (%) | N₂ | Duration |
|---|---|---|---|---|---|---|
| Reducing | 3 | 3 | 0 | 10 | Balance | 3 min |
| Oxidizing | 0 | 0 | 3 | 10 | Balance | 3 min |

The HC, CO and NOₓ T₅₀ light-off temperatures of the aged Comparative Catalyst A, Comparative Catalyst B, and Catalyst C are shown in **Table 2.** The data indicate that, surprisingly, Catalyst C of the present invention (i.e. that was manufactured using a Ta-POM as described herein) gave significantly improved light-off performance when compared with Comparative Catalyst A (Rh/Al₂O₃) and Comparative Catalyst B (Nb-POM added Rh/Al₂O₃). The impact of the light-off performance improvement was about 9°C, 21°C and 11°C lower T₅₀ (T₅₀ is the temperature when the conversion reaches 50%, as is known to the skilled person) for CO, HC and NOₓ, respectively, for Catalyst C of Ta-POM added Rh/Al₂O₃ as compared to Comparative Catalyst A of Rh/Al₂O₃. The impact was also observed for Comparative Catalyst B of Nb-TOM added Rh/Al₂O₃ as respect to Comparative Catalyst A of Rh/Al₂O₃ with about 1°C, 11°C and 3°C lower T₅₀ for CO, HC and NOₓ, respectively. While both Ta-POM and Nb-POM addition can improve light-off performance of Rh/Al₂O₃, the impact is much more significant for Ta-POM.

**Table 2: SCAT Light-Off Test Results**

| | **T₅₀ (°C)** | |
|---|---|---|
| | HC | NOₓ |
| **Comparative Catalyst A** | 310 | 277 |
| **Comparative Catalyst B** | 299 | 274 |
| **Catalyst C** | 289 | 266 |

### EXAMPLE 2: Light-Off Performances in Synthetic Catalyst Activity Test for Ta Oxide and Ta-POM-Added Rh/alumina Materials

### Comparative Catalyst D

Comparative Catalyst D was a single-layered TWC coated on a ceramic substrate (400 cpsi, 4.0 mil wall thickness). The catalyst layer consisted of Rh supported on a washcoat of La-stabilized alumina. The washcoat loading was about 0.6 g/in³ with a Rh loading of 0.9 g/ft³.

### Comparative Catalyst E

Comparative Catalyst E was a single-layered TWC coated on a ceramic substrate (400 cpsi, 4.0 mil wall thickness). The catalyst layer consisted of solid Ta₂O₅-added Rh supported on a washcoat of La-stabilized alumina. The washcoat loading was about 0.6 g/in³ with a Rh loading of 0.9 g/ft³, and Ta loading of 9 g/ft³.

### Catalyst F

Catalyst F was a single-layered TWC coated on a ceramic substrate (400 cpsi, 4.0 mil wall thickness). The catalyst layer consisted of Ta-POM-added Rh supported on a washcoat of La-stabilized alumina. The washcoat loading was about 0.6 g/in³ with a Rh loading of 0.9 g/ft³ and Ta loading of 79 g/ft³.

Comparative Catalysts D and E, and Catalyst F were tested separately over a Synthetic Catalyst Activity Test (SCAT) device, after the hydrothermal ageing for 4 hours at 1050 °C under the redox conditions shown in **Table 1.**

The HC, CO, and NOₓ T₅₀ light-off temperatures of the aged Comparative Catalysts D and E, and Catalyst F are shown in **Table 3.** The data indicate that, surprisingly, Catalyst F of the present invention (i.e. that was manufactured using a Ta-POM as described herein) also gave significantly improved light-off performance when compared with Comparative Catalyst E (Ta₂O₅-added Rh/Al₂O₃, i.e. not via the Ta-POM route). The impact of the light-off performance improvement was about 47 °C, 64 °C and 54 °C lower T₅₀ for CO, HC and NOₓ, respectively, for Catalyst F of Ta-POM-added Rh/Al₂O₃ as compared to Comparative Catalyst E of Ta₂O₅-added Rh/Al₂O₃. The impact was not observed for Comparative Catalyst E of Ta₂O₅-added Ph/Al₂O₃ as compared to Comparative Catalyst D of Rh/Al₂O₃.

**Table 3: SCAT Light-Off Test Results**

| | **T₅₀ (°C)** | |
|---|---|---|
| | HC | NOₓ |
| **Comparative Catalyst D** | 369 | 335 |
| **Comparative Catalyst E** | 372 | 334 |
| **Catalyst F** | 308 | 280 |

### EXAMPLE 3: Light-Off Performances in Synthetic Catalyst Activity Test for Different amount of Ta-POM Added Rh/alumina Materials

### Comparative Catalyst G

Comparative Catalyst G was a single-layered TWC coated on a ceramic substrate (400 cpsi, 4.0 mil wall thickness). The catalyst layer consisted of Rh supported on a washcoat of La-stabilized alumina. The washcoat loading was about 0.6 g/in³ with a Rh loading of 0.9 g/ft³.

### Catalyst H

Catalyst H was a single-layered TWC coated on a ceramic substrate (400 cpsi, 4.0 mil wall thickness). The catalyst layer consisted of Ta-POM-added Rh supported on a washcoat of La-stabilized alumina. The washcoat loading was about 0.6 g/in³ with a Rh loading of 0.9 g/ft³ and Ta loading of ~1.7 g/ft³.

### Catalyst I

Catalyst I was a single-layered TWC coated on a ceramic substrate (400 cpsi, 4.0 mil wall thickness). The catalyst layer consisted of Ta-POM-added Rh supported on a washcoat of La-stabilized alumina. The washcoat loading was about 0.6 g/in³ with a Rh loading of 0.9 g/ft³ and Ta loading of ~8.6 g/ft³.

### Catalyst J

Catalyst J was a single-layered TWC coated on a ceramic substrate (400 cpsi, 4.0 mil wall thickness). The catalyst layer consisted of Ta-POM-added Rh supported on a washcoat of La-stabilized alumina. The washcoat loading was about 0.6 g/in³ with a Rh loading of 0.9 g/ft³ and Ta loading of ~43 g/ft³.

Comparative Catalyst G and Catalysts H-J were tested separately over a Synthetic Catalyst Activity Test (SCAT) device, after the hydrothermal ageing for 4 hours at 1050 °C under the redox conditions shown in **Table 1.**

The HC and NOₓ T₅₀ light-off temperatures of the aged Comparative Catalyst G and Catalysts H-J are shown in **Table 4.** The data indicate that, surprisingly, Catalyst H of the present invention (i.e. that was manufactured using a Ta-POM as described herein with Ta loading of ~1.7 g/ft³) gave the best light-off performance when compared with Comparative Catalyst G (Rh/Al₂O₃, i.e. no Ta loading) and Catalyst I (i.e. that was manufactured using a Ta-POM as described herein with Ta loading of ~8.6 g/ft³) and Catalyst J (i.e. that was manufactured using a Ta-POM as described herein with Ta loading of ~43 g/ft³). The T₅₀ for HC and NOₓ with Catalyst H were about 14 °C and 8 °C lower, respectively, to Comparative Catalyst G. The benefit of higher Ta loadings in Catalyst I and Catalyst J are relatively limited for the catalyst light-off performance.

**Table 4: SCAT Light-Off Test Results**

| | **T₅₀ (°C)** | |
|---|---|---|
| | HC | NOₓ |
| **Comparative Catalyst G** | 339 | 301 |
| **Catalyst H** | 325 | 293 |
| **Catalyst I** | 335 | 303 |
| **Catalyst J** | 335 | 303 |

## Claims

1. A catalyst article comprising a substrate and a catalyst composition disposed on the substrate, the catalyst composition comprising a support material having supported thereon:
one or more platinum group metals (PGMs); and
a Ta-polyoxometalate (POM).

2. The catalyst article of claim 1, wherein the catalyst article is for treating exhaust gas from an internal combustion engine, preferably wherein the catalyst article is a three-way catalyst (TWC) article.

3. The catalyst article of claim 1 or claim 2, wherein the Ta-POM comprises Ta-hexametalate.

4. The catalyst article of any preceding claim, wherein the one or more PGMs comprise one or more of Pt, Pd, Rh, and mixtures or alloys thereof, preferably wherein the one or more PGMs comprise Rh.

5. The catalyst article of any preceding claim, wherein the one or more PGMs comprise nanoparticles having a mean particle diameter of from 0.1 to 10 nm, preferably from 0.5 to 9 nm, more preferably from 1 to 8 nm, even more preferably from 2 to 7 nm, still more preferably from 3 to 6 nm.

6. The catalyst article of any preceding claim, wherein the support material comprises one or more of alumina and a ceria-containing mixed oxide, preferably alumina and/or a ceria-zirconia mixed oxide, more preferably alumina.

7. The catalyst article of any preceding claim, wherein at least a portion of the Ta-POM is in direct contact with at least a portion of the one or more PGMs.

8. The catalyst article of claim 7, wherein at least 70 wt.% of the Ta-POM that is supported on the support material is in direct contact with at least a portion of the one or more PGMs, based on the total weight of Ta-POM supported on the support material.

9. The catalyst article of any preceding claim, wherein the molar ratio of the Ta-POM to the one or more PGMs supported on the support material is from 1:1 to 100:1, preferably from 3:1 to 70:1, more preferably from 5:1 to 50:1.

10. The catalyst article of any preceding claim, wherein the substrate is a flow-through monolith or a wall-flow filter.

11. The catalyst article of any preceding claim, wherein the catalyst composition of the catalyst article is obtained or obtainable by a method comprising:
providing a support material comprising one or more PGMs supported thereon;
providing a solution comprising a Ta-POM; and
contacting the support material with the solution.

12. The catalyst article of claim 11, wherein the solution comprising a Ta-POM is an aqueous solution comprising a Ta-POM.

13. The catalyst article of claim 11 or 12, wherein providing the support material comprising one or more PGMs supported thereon comprises pre-treating the support material comprising one or more PGMs supported thereon at a temperature of from 300 to 500°C for from 1 to 3 hours.

14. A catalyst article obtained or obtainable by calcining a catalyst article according to any preceding claim.

15. The catalyst article of claim 14 comprising particles of Ta₂O₅ supported on the one or more PGMs.

16. A catalyst article comprising a substrate and a catalyst composition disposed on the substrate, the catalyst composition comprising a support material having supported thereon:
one or more platinum group metals (PGMs); and
Ta₂O₅;
wherein the catalyst composition is obtained or obtainable by a method comprising:
providing a support material comprising one or more PGMs supported thereon;
providing a solution comprising a Ta-POM;
contacting the support material with the solution to provide a support material comprising the Ta-POM supported thereon; and
calcining the support material comprising the Ta-POM supported thereon.
